Europäisches Patentamt

European Patent Office

Office européen des brevets

(11) Publication number: **0 434 210 A2**

## (12) EUROPEAN PATENT APPLICATION

(21) Application number: **90312509.4**

(22) Date of filing: **16.11.90**

(51) Int. Cl.5: **B60J 10/08**

(30) Priority: **20.12.89 GB 8928786**

(43) Date of publication of application:
**26.06.91 Bulletin 91/26**

(84) Designated Contracting States:
**BE DE ES FR IT SE**

(71) Applicant: **DRAFTEX INDUSTRIES LIMITED**
**3 Glenfinlas Street**
**Edinburgh, EH3 6YY, Scotland(GB)**

(72) Inventor: **Ginster, Helmut**
**Greefsalle 60**
**W-406 Viersen 1(DE)**

(74) Representative: **Foster, David Martyn et al**
**MATHISEN MACARA & CO. The Coach**
**House 6-8 Swakeleys Road**
**Ickenham Uxbridge UB10 8BZ(GB)**

(54) Sealing strips.

(57) A sealing strip 30 for sealing between a flange 26 running around a door opening in the vehicle body and the door 28 itself comprises a channel-shaped gripping part 6 which firmly embraces the flange 26 and which supports a soft sealing part 8. The sealing part 8 has an internal wall 36 to prevent it being distorted by the closing door 28. However, by arranging for the wall 36 to extend diagonally between the plane of the flange 26 and the plane of the door 28, the amount of the partially compressed rubber which becomes folded up in the gap A when the door is closed is much less than would be the case were the wall to be parallel to the flange, and this reduction in the amount of rubber makes for easier closing of the door.

Fig.4.

## SEALING STRIPS

The invention relates to a sealing strip mounted around the frame of an opening closable by a closure member, comprising a hollow tubular flexible member arranged to extend longitudinally along the frame so as to be partially compressed between the frame and the closing closure member, and an internal flexible wall extending along the length of the tubular member and across its interior in a direction inclined to the direction of approach of the closing closure member so as to divide the interior into separated approximately triangular-shaped portions.

Examples of the sealing strips embodying the invention may be used for sealing around door and similar openings on motor vehicle bodies.

Sealing strips for sealing around door and similar openings in motor vehicle bodies are known (e.g. GB-A-2 127 884) in the form of soft tubular rubber strips supported along the body work flange running around the door opening which is formed where the inner and outer body panels are welded together. The closing door contacts the sealing part, partially compressing it to make a good weather seal. Where the gap to be sealed is relatively large, it is also known to arrange the tubular part in the form of a "double tube", that is, in the form of two side-by-side tubes having an integral common wall. Such a construction gives the tubular part the necessary physical strength to have a larger size and thus to fill the relatively large gap. However, a disadvantage of such an arrangement is that a substantial amount of the flexible material (normally rubber) has to be compressed between the closing door and its frame. This produces resistance to the closing of the door. Ease of closing is found to depend to a significant extent on the amount of rubber between the edge of the door and the flange. If the construction of the sealing part is such that there is too much rubber here when the door is closed, there is likely to be considerable resistance to easy closing.

It is further known from GB-A-2 058 892 to construct a hollow sealing part with two interior walls which are inclined to the direction of approach of the closure member. These inclined walls are intended to improve the stability of the sealing part, but they also present the same problem as outlined above - an increase of the amount of rubber compressed between the closing door and the frame.

It is this problem which the invention aims to overcome.

Accordingly, the sealing strip as first set forth above is characterised in that the tubular flexible member is mounted so that the outside of only one of the triangular portions is contacted by the closing closure member, and the flexible wall member extends in a direction outwardly of the periphery of the closing closure member.

In this way, the flexible wall member provides support for the hollow tubular member but does not significantly increase the amount of rubber which is compressed between the closing door and the frame.

A sealing strip embodying the invention will now be described, by way of example only, with reference to the accompanying diagrammatic drawings in which:-

Figure 1 shows a known form of sealing strip in cross-section and in position on a bodywork flange;

Figure 2 shows the sealing strip of Figure 1 but with the door closed;

Figure 3 is a cross-section through a sealing strip embodying the invention; and

Figure 4 shows the sealing strip of Figure 3 but with the door closed.

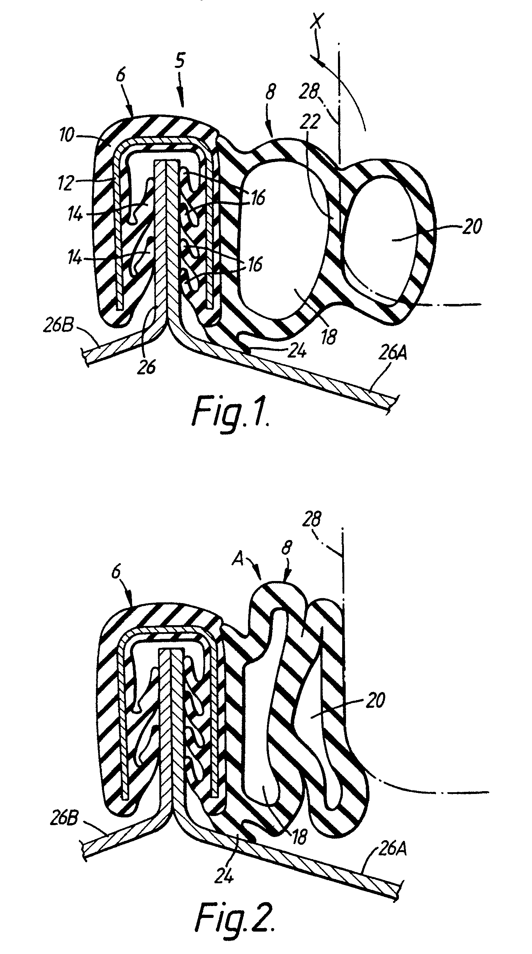

The sealing strip 5 in Figure 1 comprises a gripping part 6 and a sealing part 8. The gripping part 6 is channel-shaped in cross-section and made of extruded rubber or plastics 10 in which is embedded a metal core or carrier 12. The carrier 12 may take any suitable form. It may, for example, comprise inverted U-shaped metal strips placed side-by-side to form a channel and connected together by short flexible integral connecting links or completely disconnected from each other. Instead, it could be made of looped wire. Other forms of carrier are possible.

The gripping part 6 may be manufactured by extruding the rubber or plastics material 10 over the carrier 12 using a known cross-head extruder. The extrusion process extrudes the plastics or rubber material 10 so as to produce integral gripping lips 14 and 16.

The sealing part 8 is normally made of extruded rubber, which is normally of cellular form to increase its flexibility and softness. Figure 1 shows a known form of construction in order to provide effective sealing. Thus, the sealing part is made in the form of two integral generally circular tubes 18 and 20 with a dividing wall 22 between them. The sealing part also has a small integral lip 24.

In use, the sealing strip is mounted on the vehicle body by placing the gripping part 6 over the bodywork flange 26 which runs around the vehicle door opening and forms the frame of the opening. The flange 26 is formed where the outer and inner body panels 26A,26B are welded together at the opening. The gripping part 6 is held in position on the flange 26 by the friction and shape of the gripping lips 14 and 16 and the resilience of the metal carrier 12. It thus positions the sealing part 8 so as to project outwardly of the door opening which is closable by a door whose edge is shown dotted at 28.

It is necessary to construct the sealing part 8 in the form of two integral tubes separated by the wall 22 in order to provide a sealing part which will be sufficiently extensive to seal effectively across the gap between the closed door and the flange 26 and at the same time to be sufficiently stable so as not to be so distorted by the closing door as to lose its sealing function. For example, if the wall 22 is omitted altogether, so that the sealing part 8 has the same general outside dimension but with a single hollow interior, it is found that there is a significant risk that the closing door will push the sealing part in the direction of the arrow X. In an extreme case, the sealing part can be pushed to such an extent in this direction as to be pushed partially over the top of the gripping part 6; it then takes a "set" and is incapable of carrying out a proper sealing function.

In order to improve gripping and sealing, the lips 14 and 16 may be extruded so as to be relatively soft. The remainder of the material 10 may be harder.

If the material 10 is plastics, the gripping part will be manufactured separately from the sealing part 8 and the two will then be secured together as by means of adhesive. However, if the material 10 of the gripping part is rubber, then the gripping part and the sealing part can be co-extruded.

Figure 2 shows the sealing strip 5 of Figure 1 but with the door 28 in the closed position. As will be apparent, the sealing part 8 has been partially compressed by the closed door and the two hollow tubular parts 18 and 20 are partially collapsed. In the region A, it will be apparent that several thicknesses of rubber are superimposed on each other, increasing the so-called "block height" (the thickness of the compressed rubber) and providing relatively severe resistance to the closing of the door.

Lip 24 provides additional sealing.

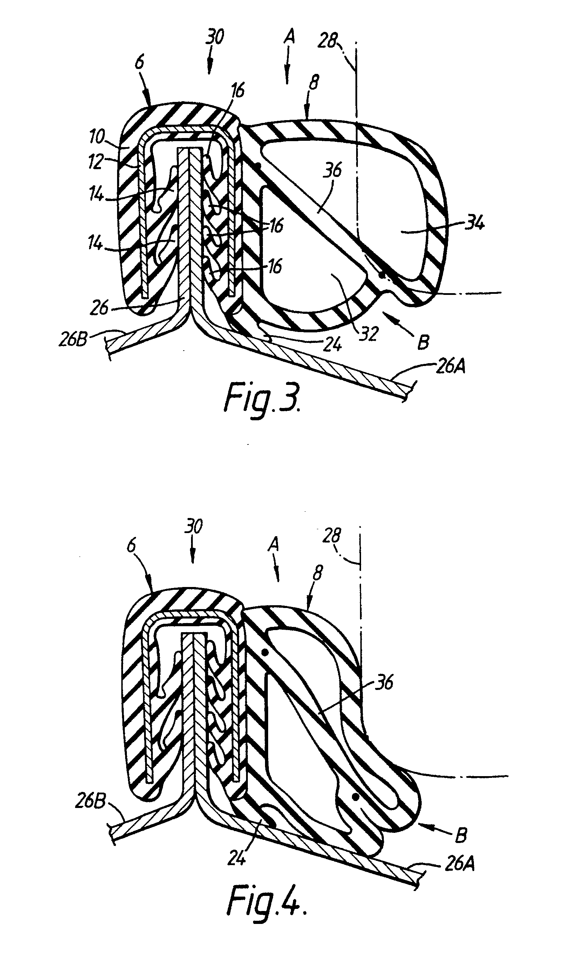

Figures 3 and 4 show a sealing strip 30 embodying the invention. Items in Figures 3 and 4 corresponding to those in Figures 1 and 2 are correspondingly referenced. The gripping part 6 can be substantially identical with the gripping part 6 of the sealing strip 5. However, the sealing part 8 differs in construction. Like the sealing part 8 of the sealing strip 5, it is made of extruded material, preferably cellular rubber. However, instead of being in the form of two hollow generally circular cross-section tubular parts 18 and 20 separated by an integral wall 22 which is substantially parallel to the flange 26 and the face 28 of the door, it is in the form of two generally triangular-shaped hollow parts 32 and 34 which are separated by an integral wall 36 extending diagonally to the flange 26 and the face 28 of the door.

Figure 4 shows the sealing strip 30 of Figure 3 in the attitude which it assumes when the door 28 is closed. It will be apparent that the amount of partially compressed rubber in the region A is very much less than shown for the known form of sealing strip in Figure 2. This is mainly because of the diagonally arranged dividing wall 36. In addition, however, the configuration of the sealing part 8 of the strip 30, and the wall 36, is such that the outside wall of the lower triangular hollow part 32 is pressed down onto the outside body panel 26A and provides an additional or secondary sealing function.

Although the sealing strip 30 does provide several partially compressed layers of rubber at the region B, this is relatively insignificant as a problem because the dimension between the closed door and the bodywork panel 26A can be readily easily controlled - more easily than can the dimension across the gap A.

The dividing wall 36 is also advantageous in that it helps to prevent the sealing part 8 bridging across corners or sharp bends in the door opening - that is, it helps to prevent the sealing part moving in a direction corresponding to arrow X (Figure 1). Furthermore, at points in the door of frame (e.g. at the waist of the body) where there is an "S" bend, the wall 36 helps to prevent a tendency of the sealing part to collapse.

## Claims

1. A sealing strip mounted around the frame (26) of an opening closable by a closure member (28), comprising a hollow tubular flexible member (8) arranged to extend longitudinally along the frame (26) so as to be partially compressed between the frame (26) and the closing closure member (28), and an internal flexible wall (36) extending along the length of the tubular member (8) and across its interior in a direction inclined to the direction of approach of the closing closure member (28) so as to divide the interior into separated approximately triangular-shaped portions (32,34), characterised in that the tubular flexible member (8) is mounted so that the outside of only one (34) of the triangular portions is contacted by the closing closure member (28), and the flexible wall member (36) extends in a direction outwardly of the periphery of the closing closure member (28).

2. A strip according to claim 1, characterised by a surface (26A) adjacent to the frame (26) and extending transversely thereto on the side of the frame (26) from which the closure member (28) approaches, such that the closing closure member (28) presses the other triangular portion (32) against this surface (26A).

3. A strip according to claim 1 or claim 2, characterised in that the hollow flexible member (8) is supported on the frame (26) by a channel-shaped gripping part (6) embracing a flange (26) or similar mounting member which constitutes the frame and which lies substantially in or parallel to the plane of the opening.

4. A strip according to claim 3, characterised in that the gripping part (6) and the hollow tubular member (8) are integral.

5. A strip according to any preceding claim, in which the opening is a door opening on a vehicle body.

Fig.1.

Fig.2.

Fig.3.

Fig.4.